# EUROPEAN PATENT SPECIFICATION

(11) **EP 0 669 868 B1**
(45) Date of publication and mention of the grant of the patent: **12.03.1997**
(21) Application number: 94902125.7
(22) Date of filing: 16.11.1993
(51) Int. Cl.: B29C 67/00, B29C 63/34, B29B 13/02

(54) **METHOD FOR PRODUCING A DEFORMED PIPE LINER**
VERFAHREN ZUR HERSTELLUNG EINER IM QUERSCHNITTVERFORMTEN ROHRAUSKLEIDUNG
PROCEDE DE PRODUCTION D'UN REVETEMENT INTERIEUR DEFORME POUR TUYAU

(30) Priority: 23.11.1992 NL 9202029
(43) Date of publication of application: 06.09.1995
(73) Proprietor: WAVIN B.V., NL-8011 CW Zwolle (NL)
(72) Inventor: VAN HOUTEN, Jan, Anne, NL-7943 HK Meppel (NL); OTTER, Wim, NL-7695 TT Bergentheim (NL)
(74) Representative: Iemenschot, Johannes Andreas, Ir.
(86) International application number: NL9300241
(87) International publication number: WO9412339

(56) References cited:
- GB-A- 2 251 471
- US-A- 3 481 051
- US-A- 4 998 871

## Description

The present invention relates to a method for producing a deformed pipe liner according to the preamble of claim 1.

Such a method is known from US 4,998,871, in which a method is described for producing a deformed pipe liner with a wall made of thermoplastic material which is subsequently installed inside a pipeline, in particular a sewer pipe. The pipe liner is rerounded by introducing into the inside of a sealed-off part of the pipe liner heating and pressure means which, partly through the shape memory effect of the thermoplastic material, return the pipe liner virtually to its original shape when it has been placed in the pipeline to be lined. Shape memory effect here means the property of an article made of thermoplastic material which, after it has been deformed at a specific raised temperature and has cooled down (in which case the deformation is, as it were, frozen) makes it return by itself to its original shape on heating, as the result of internal stresses. In the case of the known method, the still warm tubular starting section leaving an extruder is deformed by means of a wheel with a hollow rim which is driven so that it rotates about an axis lying at right angles to the longitudinal axis of a throughput path for the tubular section. In this case a part of the wall of the starting section which is to be folded inwards is pressed by the wheel in the direction of an opposite-lying part of the wall of the starting section. Here, the temperature of the plastic material of the tubular starting section is kept as uniform as possible from the inside of the wall to the outside of the wall, said temperature being equal to or higher than the crystalline melting temperature of the plastic material. A heating medium, for example oil, is also fed through the hollow rim of the rotatable wheel. After this step, the tubular section, then deformed into a C-shape, is deformed yet further by two rollers acting on opposite sides of the tubular section, following which the tubular section is cooled down to ambient temperature. This method has the disadvantage that the pipe liner which has been produced exhibits little shape memory effect on introduction into the pipeline to be lined, with the result that installation of the pipe liner requires an excessive effort. Furthermore, during the deformation greater elongation occurs in the plastic material in the part of the wall which is to be pressed inwards - which is the part undergoing the greatest deformation - than in the remaining part of the wall. This means that the pipe liner produced has undesirable differences in wall thickness over the circumference.

The object of the invention is therefore to provide a method for producing a deformed pipe liner which does not have the abovementioned disadvantages.

This object is achieved by a method of the kind mentioned in the preamble of claim 1, which is characterized in that the inside of the wall of the starting section is kept at a higher temperature than the outside of the wall at least during the deformation of the starting section. This ensures that the plastic material lying at the outside of the wall, which is deformed at a relatively low temperature, has a strong shape memory effect for the initial annular configuration, while the plastic material lying further in, on the contrary, has a, relatively weak, shape memory effect for the folded C-shape configuration. After the desired deformation has been brought about and the plastic material has subsequently been cooled down and solidified, the plastic material lying at the inside of the wall counteracts the shape memory effect (internal stresses) present in the plastic material lying at the outside of the wall of the tubular section. When the deformed pipe liner has been inserted in a pipeline, the pipe liner is then heated from the inside outwards, with the result that the plastic material at the inside of the wall becomes plastic first. The result of this is that the plastic material at the inside of the wall can no longer counteract the shape memory effect of the plastic material lying at the outside of the wall, and the pipe liner quickly returns virtually to its original shape.

The temperature of the inside of the wall is preferably kept lower than the crystalline melting temperature of the plastic material, at least during the deformation of the tubular starting section. In this way optimum use is made of the shape memory effect, and differences in wall thickness over the circumference are reduced.

It is also preferable, at least during the deformation, for the part of the wall of the tubular liner which is to be folded inwards to be kept at a lower temperature than the remaining part of the wall. This means that the part of the wall to be folded inwards becomes relatively sturdy compared with the remaining part of the wall. The stresses produced in the plastic material during deformation are then uniformly distributed over the circumference of the wall, with the result that wall thickness differences are even further avoided. In this case it is advantageous for the shaping means to be cooled.

The invention will be further explained below with reference to the drawing, in which:

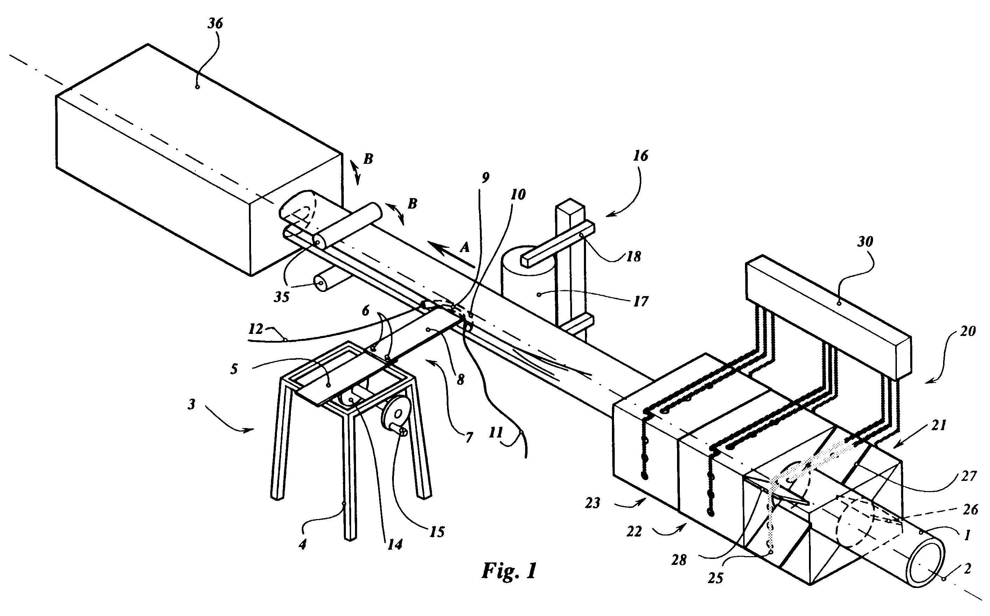

Fig. 1 shows a view in perspective of an examplary embodiment of a device for producing a deformed pipe liner according to the invention;
Figure 1 shows diagrammatically a device for the production of a deformed pipe liner made of thermoplastic material. More particularly, the device produces deformation of the starting section 1 with an annular cross-section, moving in the direction of arrow A along a throughput path of the device, until it is a deformed pipe liner with an essentially C-shaped cross-section. The starting section 1 comes in a warm state out of an extruder (not shown). For effecting the C-shaped deformation, a press-in mechanism 3 acts upon the starting section 1 in a plane through longitudinal axis 2 of the throughput path. The press-in mechanism 3 comprises a frame 4 and a movable slide 5 which is accommodated therein and can be moved at right angles to the throughput path. A press-in member 7 is detachably fixed to the slide 5 by means of bolts 6. The press-in member 7 consists of a support 8 and a curved hollow tubular part 9 welded thereto which forms the pressure face 10. The pressure face 10 can be cooled by feeding a cooling medium such as water through a flexible supply line 11 and discharge line 12, between which the tubular part 9 is accommodated. For movement of the slide 5 at right angles to the throughput path, provision is made for a gear rack mechanism 14 which can be operated by means of crank 15. Placed opposite the pressure mechanism 3 is a supporting mechanism 16, which comprises a rotatable roller 17 which is supported by a frame and which forms a supporting face. The roller 17 in this case is fitted between two bars 18, which can be slid at right angles to the longitudinal axis 2 of the throughput path and can be fixed relative to the frame. The device shown can be adapted in a simple way to cross-section dimensions of the pipe liner to be produced. Where there is a different cross-section dimension only the press-in member 7, which is simple to manufacture, need be changed. Other shapes of the pressure means (3) and the supporting means (16) are also possible.

The temperature of the plastic material of the tubular section is maintained in such a way during the C-shaped deformation that the temperature at the outside of the wall is lower than at the inside of the wall. The temperature of the inside of the wall is preferably slightly lower here than the crystalline melting temperature of the thermoplastic material. In practice, this can be achieved by, for example, suitable positioning of the press-in and supporting mechanism relative to the extruder (not shown), in which case cooling down in the ambient air then leads to the desired temperature profile.

The device is preferably provided with a cooling device which gives the starting section the desired temperature profile prior to the deformation. Such a cooling device is shown partially in cross-section in Figure 1 and is indicated by the reference number 20. Viewed in the direction of the throughput path, the cooling device 20 comprises three compartments 21, 22, 23 which are separated by partitioning walls and are each provided with sprinklers for a cooling medium which are placed all around the throughput path. In addition, viewed in the peripheral direction of the throughput path, each compartment is further sub-divided by partitions 25, 26, 27, 28. By providing control means 30, which operate the sprinklers placed in each separate part of the cooling device 20, and/or by controlling the temperature of the cooling medium, it is possible to set the temperature of the wall of the starting section accurately prior to the deformation. In particular, it is possible to bring the wall of the starting section to different temperatures in the peripheral direction. In this case the part of the wall to be folded inwards is preferably brought to a slightly lower temperature than the remaining part of the wall, so that during the deformation no undesirable elongation occurs in the part of the wall to be folded inwards. In the example shown, this part passes along the parts of the cooling device 20 bounded by the partitions 25 and 28.

The cooling device 20 causes a temperature profile with a relatively steep decrease at the outside of the wall of the starting section, while the temperature further inwards is uniformly high. Through a suitable choice of the distance between the cooling device 20, on the one hand, and the press-in and supporting mechanism, on the other, such a residence time of the starting section in the air is obtained that the temperature profile from the outside to the inside of the wall becomes more uniform.

Two rollers 35 are disposed downstream of the press-in mechanism, for further pressing together of the tubular section deformed into a C-shape. Disposed down-stream of these rollers 35 is a cooling device 36 for cooling down the deformed pipe liner to ambient temperature. Since the part of the wall folded inwards has the tendency to sink downwards under its own weight so long as the pipe liner is not completely cooled down, the rollers 35 and the cooling device 36 are made rotatable in such a way (arrows B) that their position relative to the longitudinal axis 2 of the throughput path can be set in order to be able to adjust the final shape of the pipe liner. A drawing machine for moving the pipe liner along and a reeling device (not shown) are normally disposed downstream of the device shown in Fig. 1.

With the method and device described above it is possible to produce, for example, a deformed pipe liner starting from a tubular starting section made of high-density polyethylene (HDPE) with a diameter of 200 mm and a wall thickness of 12 mm. During the deformation to a C-shape configuration the inside of the wall is kept at 100-120°C and the outside at 70-80°C, while the crystalline melting temperature of the plastic material is 130°C. The above temperatures depend on the wall thickness/diameter ratio and the absolute wall thickness of the starting section. It is understood that other measures may be taken to obtain a temperature profile of the starting section according to the invention. As a thick walled pipe liner is produced, for example, the desired temperature profile of the pipe liner wall can be obtained as follows: The starting section leaving the extruder is cooled exteriorly, as described above, such that the temperature of the inside of the wall reaches the predetermined desired temperature. Due to the low thermal conductivity of most plastic materials this temperarture of the inside wall can, in the case of a thick wall, only be reached by cooling the outside of that wall to a temperature below the desired temperature thereof. Therefore it will be necessary to raise the temperature of the outside of the wall prior to the deformation of the starting section. This can be effected through heating means acting upon the exterior of the starting section.

The cooling to ambient temperature of the pipe liner can be initiated at the moment of deformation, for example through sprinklers disposed around the throughput path.

## Claims

1. Method for producing a deformed pipe liner, comprising the extrusion of a starting section with a wall made of thermoplastic material which has an essentially annular cross-section, and the deformation of the starting section to a tubular section with an essentially C-shaped cross-section by moving the starting section along between shaping and supporting means, in the course of which a part of the wall of the starting section which is to be folded inwards is pressed in the direction of an opposite-lying part of the wall, **characterized in that** the inside of the wall of the starting section is kept at a higher temperature than the outside of the wall, at least during the deformation of the starting section.

2. Method according to claim 1, **characterized in that** the temperature of the inside of the wall is kept lower than the crystalline melting temperature of the plastic material, at least during the deformation of the starting section.

3. Method according to claim 1 or 2, **characterized in that** the part of the wall which is to be folded inwards is kept at a lower temperature than the remaining part of the wall, at least during the deformation of the starting section.

4. Method according to one of the preceding claims, **characterized in that** the shaping means are cooled.

## Patentansprüche

1. Verfahren zur Herstellung einer verformten Rohrauskleidung, bestehend aus der Extrusion eines Ausgangsabschnitts mit einer Wand aus thermoplastischem Material, die einen im wesentlichen ringförmigen Querschnitt besitzt, und der Verformung des Ausgangsabschnitts zu einem Rohrabschnitt mit einem im wesentlichen C-förmigen Querschnitt durch Entlangbewegen des Ausgangsabschnitts zwischen Formgebungs- und Stützmitteln, in dessen Verlauf ein Teil der Wand des Ausgangsabschnitts, der nach innen zu falten ist, in Richtung eines gegenüberliegenden Teils der Wand gedrückt wird, dadurch gekennzeichnet, daß die Innenseite der Wand des Ausgangsabschnitts auf einer höheren Temperatur als die Außenseite der Wand, zumindest während der Verformung des Ausgangsabschnitts, gehalten wird.

2. Verfahren nach Anspruch 1, dadurch gekennzeichnet, daß die Temperatur der Innenseite der Wand niedriger als die Kristallschmelztemperatur des Kunststoffes, zumindest während der Verformung des Ausgangsabschnitts, gehalten wird.

3. Verfahren nach Anspruch 1 oder 2, dadurch gekennzeichnet, daß der Teil der Wand, der nach innen zu falten ist, auf einer niedrigeren Temperatur als der übrige Teil der Wand, zumindest während der Verformung des Ausgangsabschnitts, gehalten wird.

4. Verfahren nach einem der vorhergehenden Ansprüche, dadurch gekennzeichnet, daß die Formgebungsmittel gekühlt werden.

## Revendications

1. Procédé pour fabriquer un revêtement intérieur déformé pour tuyau, comprenant l'extrusion d'un tronçon de départ possédant une paroi faite d'une matière thermoplastique, qui présente une section transversale sensiblement annulaire, et la déformation du tronçon de départ pour le transformer en un tronçon tubulaire présentant une section transversale sensiblement en forme de C en faisant avancer le tronçon de départ entre des moyens de façonnage et de support, déformation au cours de laquelle une partie de la paroi du tronçon de départ, qui doit être repliée vers l'intérieur est pressée dans la direction d'une partie de la paroi, qui s'étend en vis-à-vis, **caractérisé en ce que** la partie intérieure de la paroi du tronçon de départ est maintenue à une température plus élevée que la partie extérieure de ladite paroi, au moins au cours de la déformation du tronçon de départ.

2. Procédé selon la revendication 1, **caractérisé en ce que** la température de la partie intérieure de la paroi est maintenue à une valeur inférieure à la température de fusion cristalline de la matière plastique, au moins au cours de la déformation du tronçon de départ.

3. Procédé selon la revendication 1 ou 2, **caractérisé en ce que** la partie de la paroi, qui doit être repliée vers l'intérieur est maintenue à une température inférieure à celle du reste de la paroi, au moins au cours de la déformation du tronçon de départ.

4. Procédé selon l'une quelconque des revendications précédentes, **caractérisé en ce que** les moyens de façonnage sont refroidis.
